# EUROPEAN PATENT APPLICATION

(11) **EP 4 790 633 A1**
(43) Date of publication of application: **12.08.2026**
(21) Application number: 24925134.9
(22) Date of filing: 18.12.2024
(51) Int. Cl.: G06T 1/20, G06F 9/50, G06F 9/48

(54) **MULTI-IMAGE PROCESSING UNIT CORE PARALLEL IMAGE RENDERING METHOD, PROCESSING UNIT AND DEVICE**

(71) Applicant: VeriSilicon Microelectronics (Shanghai) Co., Ltd., Shanghai 201203 (CN); VeriSilicon Technology (Shanghai) Co., Ltd., Shanghai 201306 (CN)
(72) Inventor: YU, Jinwen, Shanghai 201203 (CN); PAN, Zhe, Shanghai 201203 (CN); ZHANG, Ke, Shanghai 201203 (CN); ZHANG, Huiming, Shanghai 201203 (CN)
(74) Representative: Bryn Aarflot AS
(86) International application number: PCT/CN2024/140389
(87) International publication number: WO 2026/129203

(57) **Abstract**

The present invention provides a multi-graphics-processing-unit-core parallel rendering method, a processing unit, and a device, wherein the method includes: obtaining all API calls for multiple frames to be rendered, and writing all API calls for each frames to be rendered into different target API call buffers in preset M×N API call buffers respectively, wherein N is a positive integer larger than 1; M is a positive integer larger than 1; M API call buffers correspond to one graphics processing unit core; and the at least two target API call buffers correspond to different target graphics processing unit cores in N graphics processing unit cores; parsing all API calls in each target API call buffer to obtain all rendering tasks corresponding to each frame to be rendered; and sending all rendering tasks corresponding to each frame to be rendered to individual target graphics processing unit cores, wherein the rendering tasks corresponding to each of the target graphics processing unit cores are all the rendering tasks obtained by parsing all API calls in the target API call buffer corresponding to the target graphics processing unit core.

## Description

### TECHNICAL FIELD

The present invention relates to the technical field of graphics rendering, and specifically provides a multi-graphics-processing-unit-core parallel rendering method (i.e., a graphics rendering method, in which multiple graphics processing unit cores run in parallel), a processing unit, and a device.

### BACKGROUND ART

In the prior multi-core rendering methods, each core cooperates to render the same graphics. Therefore, in order to ensure complete and correct results, a large number of state synchronization links need to be added, which will greatly reduce the efficiency of multicore work. In the multi-core rendering method, it is necessary to continuously assign tasks to each core. Therefore, it is necessary to include an additional core selection instruction in the instructions sent to the graphics processing unit by the driver, so as to notify the graphics processing unit which core should execute the segment of the instructions, which improves an additional workload to the graphics processing unit and reduces the rendering efficiency.

### SUMMARY

In view of this, the present invention aims to provide a multi-graphics-processing-unit-core parallel rendering method, a processing unit, and a device to reduce the state synchronization link, so as to improve the operating efficiency of the core.

In a first aspect, the present invention provides a multi-graphics-processing-unit-core parallel rendering method, applied to the processing unit, wherein the method includes: obtaining all API (application programming interface) calls of multiple frames to be rendered, and writing all API calls for each frame to be rendered into different target API call buffers in preset M×N API call buffers respectively, wherein N is a positive integer larger than 1; M is a positive integer larger than 1; M API call buffers correspond to one graphics processing unit core; and the at least two target API call buffers correspond to different target graphics processing unit cores in the N graphics processing unit cores; parsing all API calls in each target API call buffer to obtain all the rendering tasks corresponding to each frame to be rendered; and sending all rendering tasks corresponding to each frame to be rendered to individual target graphics processing unit cores, so that each of the target graphics processing unit cores respectively executes the rendering tasks corresponding to each of the target graphics processing unit cores, so as to realize rendering for multiple frames to be rendered, wherein the rendering tasks corresponding to each of the target graphics processing unit cores are all the rendering tasks obtained by parsing all API calls in the target API call buffer corresponding to the target graphics processing unit core.

In the embodiments of the present invention, since all API calls for at least one frame to be rendered are stored in each API call buffer, and one API call will only be executed by its corresponding graphics processing unit core, when the rendering tasks of all API calls of one frame to be rendered is completed by one graphics processing unit core, the rendering of the frame of the frame to be rendered is realized. This process does not need the state synchronization between multiple graphics processing unit cores, which reduces the state synchronization link, and thus improves the operating efficiency of the graphics processing unit.

In conjunction with the technical solution provided in the first aspect above, in some possible embodiments, the step of obtaining all API calls of multiple frames to be rendered, and writing all API calls for each frame to be rendered into different target API call buffers into the M×N API call buffers respectively includes: obtaining all API calls of the multiple frames to be rendered and a number of each frame to be rendered, and writing the all API calls and the number of each frame to be rendered into different target API call buffers of the M×N API call buffers, wherein the number of the frame to be rendered is configured to be obtained by each of the target graphics processing unit cores, so that after each of the target graphics processing unit cores completes rendering the frames to be rendered, a display flush API included in all API calls of the frame to be rendered sequentially sends the rendered frames according to the numbers of the frames to be rendered, wherein the numbers of frame to be displayed maintained in the display flush API corresponding to different frames to be rendered are different.

In the embodiments of the present invention, the numbers of the frames to be rendered are written into the API call buffer, so that the graphics processing unit core can obtain the number of the frame to be rendered, and then the rendered frames can be sent to display according to the number of the frame to be rendered, so as to prevent errors in the order of the displayed frames to be rendered, which results in problems such as frame skipping or regression in the displayed video.

In conjunction with the technical solutions provided in the first aspect above, in some possible embodiments, each of the graphics processing unit cores holds complete rendering resources required for rendering.

In embodiments of the present invention, since each graphics processing unit core holds the complete rendering resources required for rendering, each graphics processing unit core can independently complete the rendering for one frame to be rendered.

In conjunction with the technical solutions provided in the first aspect above, in some possible embodiments, the step of writing all API calls for each frame to be rendered into different target API call buffers in preset M×N API call buffers respectively includes: sequentially writing all API calls for each frame to be rendered into different target API call buffers in the preset M×N API call buffers respectively according to a preset arrangement order of the API call buffers, wherein in the M×N API call buffers arranged in the preset arrangement order, the N consecutive API call buffers correspond to N graphics processing unit cores respectively.

In the embodiments of the present invention, since the N consecutive API call buffers correspond to N graphics processing unit cores respectively, when writing all API calls of multiple frames to be rendered, the multiple frames to be rendered can be uniformly distributed to the N graphics processing unit cores, so as to balance the workload of the various graphics processing unit cores and to improve the operating efficiency of the graphics processing unit cores.

In conjunction with the technical solutions provided in the first aspect above, in some possible embodiments, the step of parsing all API calls in each target API call buffer to obtain all the rendering tasks corresponding to each frame to be rendered includes: parsing all API calls in the M API call buffers in a preset order respectively for M API call buffers corresponding to each graphics processing unit core, wherein an order of parsing API calls in the M API call buffers is the same as an order of writing API calls in the M API call buffers.

In the embodiments of the present invention, since the order of parsing API calls in the M API call buffers is the same as the order of writing API calls in the M API call buffers, so that the graphics processing unit core can preferentially execute the rendering task of all API calls for the frame to be rendered that is written first, thereby realizing the effect that the frame to be rendered is written first is output for display first.

In conjunction with the technical solutions provided in the first aspect above, in some possible embodiments, after obtaining all API calls of the multiple frames to be rendered, the method further includes: clearing previously stored API calls for acquiring rendering resources corresponding to a current target graphics processing unit core in a new added resource buffer, wherein the current target graphics processing unit core is the target graphics processing unit core corresponding to the current target API call buffer where the API calls are being written, and the new added resource buffer is configured to store API calls for obtaining the rendering resources; writing all the cleared API calls in the new added resource buffers into the current target API call buffers; and writing the API calls for obtaining the rendering resources in the frame to be rendered corresponding to the current target API call buffers into the new added resource buffers.

In the embodiments of the present invention, after executing the API call for acquiring the rendering resources, the graphics processing unit core can acquire new rendering resources, and the acquired rendering resources can all continue to be used thereafter. Therefore, for the target graphics processing unit core, when the API call for acquiring the rendering resource is written into any one corresponding API call buffer, the new rendering resource can be obtained, so that the previously stored API calls for acquiring rendering resources corresponding to the current target graphics processing unit core in the new added resource buffer can be cleaned, so as to avoid repeated execution. By writing the API calls for obtaining the rendering resources in the frame to be rendered corresponding to the current target API call buffers into the new added resource buffers, other graphics processing unit cores can also obtain the API calls configured to obtain rendering resources, thereby maintaining the integrity of the rendering resources.

In conjunction with the technical solutions provided in the first aspect above, in some possible embodiments, after obtaining all API calls of the multiple frames to be rendered, the method further includes: clearing all API calls in the target added resource buffer corresponding to the current target graphics processing unit core, wherein the current target graphics processing unit core is the target graphics processing unit core corresponding to the current target API call buffer where the API calls are being written; N new added resource buffers are provided; each new added resource buffer corresponds to one graphics processing unit core; the new added resource buffers are configured to store API calls for acquiring the rendering resources; writing all API calls in all new added resource buffers corresponding to other graphics processing unit cores into the current target API call buffer; and writing the API calls for obtaining the rendering resources in the frame to be rendered corresponding to the current target API call buffers into the target new added resource buffer.

In the embodiments of the present invention, by setting one corresponding new added resource buffer for each graphics processing unit core, so that in M API call buffers corresponding to one graphics processing unit core, the API calls in for acquiring the rendering resources required to be written are all in the same new added resource buffer. Therefore, when clearing, all API calls in the target new added resource buffer corresponding to the current target graphics processing unit core can be cleared; and when acquiring, all API calls in all new added resource buffers corresponding to all the other graphics processing unit cores can be acquired, thereby reducing the probability of errors in clearing and acquiring.

In conjunction with the technical solutions provided in the first aspect above, in some possible embodiments, each API call buffer stores all API calls of one frame to be rendered each time.

In a second aspect, the present invention provides a multi-graphics-processing-unit-core parallel rendering method, applied to any one of graphics processing unit cores in the graphics processing unit, wherein the method includes: receiving and executing rendering tasks sent by the processing unit to realize rendering for the frame to be rendered, wherein the rendering tasks are all the rendering tasks obtained by parsing the API calls in the target API call buffer corresponding to the graphics processing unit core, wherein the target API call buffer is an API call buffer of all API calls that writes at least one frame to be rendered in preset M×N API call buffers, wherein N is a positive integer larger than 1; M is a positive integer larger than 1; M API call buffers correspond to one graphics processing unit core; and the at least two target API call buffers correspond to different target graphics processing unit cores in the N graphics processing unit cores.

In the embodiments of the present invention, the API calls in the target API call buffer are executed by one graphics processing unit core, so that the rendering for one frame to be rendered is completed by one graphics processing unit core. This process does not need the state synchronization between multiple graphics processing unit cores, which reduces the state synchronization link, and thus improves the operating efficiency of the graphics processing unit.

In conjunction with the technical solutions provided in the second aspect above, in some possible embodiments, the method further includes: acquiring a number of the frame to be rendered; executing a display flush API in the API calls in the target API call buffer after completing rendering for the frame to be rendered, so that the rendered frame can be sent to display according to the number of the frame to be rendered sequentially, wherein the numbers of frames to be displayed maintained in the display flush API corresponding to different frames to be rendered are different.

In a third aspect, the present invention provides a multi-graphics-processing-unit-core parallel rendering method, including: obtaining all API calls for multiple frames to be rendered by a processing unit, and writing all API calls for each frame to be rendered into different target API call buffers in preset M×N API call buffers respectively, wherein N is a positive integer larger than 1; M is a positive integer larger than 1; M of API call buffers correspond to one graphics processing unit core; and the at least two target API call buffers correspond to different target graphics processing unit cores in the N graphics processing unit cores; parsing all API calls in each target API call buffer by the processing unit to obtain all the rendering tasks corresponding to each frame to be rendered; and sending all rendering tasks corresponding to each frame to be rendered to individual target graphics processing unit cores by the processing unit; receiving and executing rendering tasks sent by the processing unit by each of the target graphics processing unit cores, so as to realize rendering for the frame to be rendered, wherein the rendering tasks are all the rendering tasks obtained by parsing the API calls in the target API call buffer corresponding to the graphics processing unit core, wherein the target API call buffer is an API call buffer of all API calls that writes at least one frame to be rendered in preset M×N API call buffers, wherein N is a positive integer larger than 1; M is a positive integer larger than 1; M API call buffers correspond to one graphics processing unit core; and the at least two target API call buffers correspond to different target graphics processing unit cores in the N graphics processing unit cores.

In a fourth aspect, the present invention provides a processing unit for executing the method described in the above first aspect and/or in conjunction with any one possible embodiment of the above first aspect.

In a fifth aspect, the present invention provides a graphics processing unit for executing the method described in the above second aspect and/or in conjunction with any one possible embodiment of the above second aspect.

In a sixth aspect, the present invention provides an electronic device, including: a processing unit and a graphics processing unit, wherein the processing unit is connected to the graphics processing unit, wherein the processing unit performs the method described in the first aspect and/or in conjunction with any one possible embodiment of the first aspect, and the graphics processing unit performs the method described in the second aspect and/or in conjunction with any one possible embodiment of the second aspect.

### BRIEF DESCRIPTION OF DRAWINGS

In order to more clearly illustrate the technical solutions of the embodiments of the present invention, the drawings to be used in the embodiments of the present invention will be briefly introduced below. It should be understood that the following drawings illustrate only certain embodiments of the present application, and therefore should not be regarded as a limitation of the scope. For a person of ordinary skill in the art, other relevant drawings can be obtained from these drawings without inventive efforts.
FIG. 1 shows a schematic flow diagram of a multi-graphics-processing-unit-core parallel rendering method provided by the embodiments of the present invention;
FIG. 2 shows a schematic diagram of a graphics processing unit core corresponding to two API call buffers provided by the embodiments of the present invention;
FIG. 3 shows a schematic diagram of a graphics processing unit core corresponding to two API call buffers and a new added resource buffer provided by the embodiments of the present invention;
FIG. 4 shows an architecture schematic diagram of a graphics rendering system provided by the embodiments of the present invention;
FIG. 5 is a sequence schematic diagram of writing each frame to be rendered into an API call program provided by the embodiment of the present invention;
FIG. 6 shows a schematic flow diagram of writing an API call into an API call buffers area provided by the embodiments of the present invention;
FIG. 7 shows a schematic flow diagram of executing an API call in an API call buffers area provided by the embodiments of the present invention;
FIG. 8 shows a schematic flow diagram of the other multi-graphics-processing-unit-core parallel rendering method provided by the embodiments of the present invention; and
FIG. 9 shows a structure block diagram of an electronic device provided by the embodiments of the present invention.

### DETAILED DESCRIPTION OF EMBODIMENTS

In order to make the purpose, technical solutions and advantages of the embodiments of the present invention more clearly understood, the present invention is described in further detail as follows in conjunction with the drawings and the embodiments. It should be understood that the specific embodiments described herein are intended only to illustrate the present invention, and are not intended to limit the present invention.

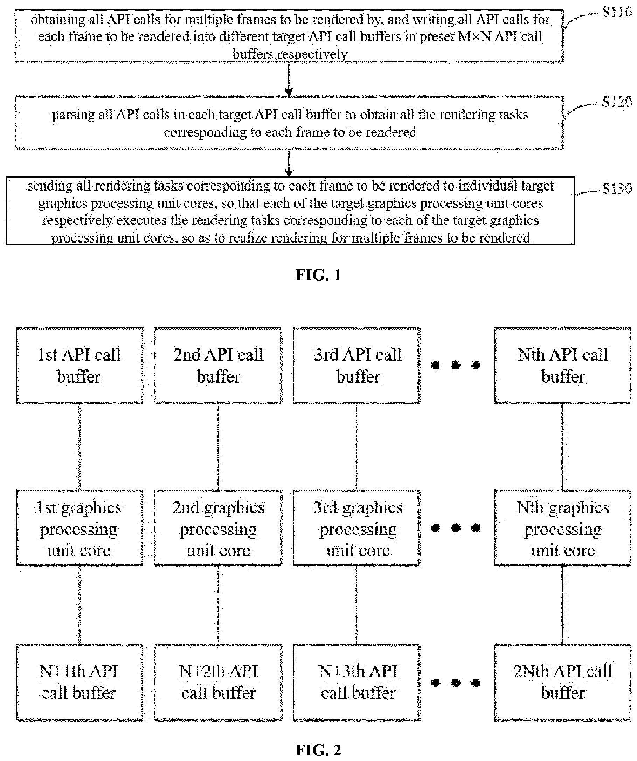

Referring to FIG. 1, FIG. 1 is a schematic flow diagram of a multi-graphics-processing-unit-core parallel rendering method provided by the embodiments of the present invention. The multi-graphics-processing-unit-core parallel rendering method is applied to the processing unit, and the steps included therein will be described below in conjunction with FIG. 1.

S110: obtaining all API calls for multiple frames to be rendered by, and writing all API calls for each frame to be rendered into different target API call buffers in preset M×N API call buffers respectively.

N is a positive integer larger than 1; M is a positive integer larger than 1; M API call buffers correspond to one graphics processing unit core; and the at least two target API call buffers correspond to different target graphics processing unit cores in the N graphics processing unit cores. The graphics processing unit core refers to a smallest working unit in the graphics processing unit capable of independently completing the graphics rendering operations.

The above processing unit can be the core of a CPU (central processing unit), AI (artificial intelligence), NPU (neural network processing Unit), ISP (image signal processor), DPU (display processing unit), VPU (video processing unit), DSP (digital signal processor), etc., or it can be a processor chip applied to some scenarios such as large-scale data computing. The foregoing is merely exemplary and should not be construed as a limitation of the present invention.

The graphics processing unit can be any type of GPU (graphics processing unit), NPU, ISP, DPU, or VPU, etc. The foregoing is merely exemplary and should not be construed as a limitation of the present invention.

When the graphics processing unit is a GPU, the graphics processing unit core is the GPU core.

All API calls of the frame to be rendered can be obtained from a third party electronic device, or can be sent from the current executing application.

The API call is the function corresponding to the API interface and other types of data, such as parameters and output results. The step of writing all API calls of the frame to be rendered into the target API call buffers is writing the function corresponding to each API call and other data such as parameters and output result types into the API call buffer.

In one embodiment, the preset M×N API call buffer can be preset, or can be established by an application that needs to use the rendering function.

In order to enable each graphics processing unit core to complete the rendering operation for one frame to be rendered, optionally, each graphics processing unit core holds the complete rendering resources required for rendering.

The rendering resources can include a scene package, a component package, a texture resource, a shader resource, and a material resource, etc. The specific type of the rendering resources can be set for the graphics processing unit core according to the actual demand, and the specific type is not limited herein.

In one embodiment, all API calls of multiple frames to be rendered can be written into the API call buffer at one time, and after all API calls of the multiple frames to be rendered have been written, S120 and S130 are executed.

Optionally, all API calls of one frame to be rendered can also be stored in each API call buffer at a time.

In one embodiment, before all API calls of the frame to be rendered are written into the API call buffer, all previously written and executed API calls of the API call buffer need to be deleted, and then all API calls of the frame to be rendered are written.

Optionally, it can delete all API calls in the target API call buffer after all API calls in the target API call buffer are executed by the graphics processing unit.

Alternatively, it can delete all API calls in the API call buffer when preparing to write all API calls of the frame to be rendered.

There are three embodiments of writing all API calls for each frame to be rendered into different target API call buffers in the preset M×N API call buffers respectively.

In a first embodiment, the specific embodiment of writing all API calls for each frame to be rendered into different target API call buffers in preset M×N API call buffers respectively can be: preferentially writing all API calls of the frame to be rendered into the API call buffer corresponding to the graphics processing unit core with a high idle rate based on the free rate (i.e., a ratio of the API call buffer waiting to be written to M) of M API call buffers corresponding to the each graphics processing unit core.

If the idle rates corresponding to all graphics processing unit cores are equal, it can write all API calls of the frame to be rendered into the API call buffer waiting to be written at random; it can determine a next API call buffer to be written according to a preset arranged API call buffer writing order; or it also can determine a next API call buffer to be written according to a preset arranged order of the graphics processing unit core.

For example, if there are two graphics processing unit cores of the graphics processing unit core 1 and the graphics processing unit core 2; the graphics processing unit core 1 corresponds to an API call buffer 11, an API call buffer 12; and an API call buffer 13, and the graphics processing unit core 2 corresponds to an API call buffer 21, an API call buffer 22, and an API call buffer 23.

If the graphics processing unit core 1 is currently executing API calls in the API call buffer 11; the graphics processing unit core 2 is currently executing API calls in the API call buffer 21; and the API call buffer 12 has completed writing of all API calls of the frame to be rendered, that is, the API call buffers currently waiting to be written are the API call buffer 13, API call buffer 22, and API call buffer 23, and the idle rate (2/3) of the graphics processing unit core 2 is higher. Therefore, all API calls of the next frame of the frame to be rendered are preferentially written to the API call buffer (the API call buffer 22 or API call buffer 23) corresponding to the graphics processing unit core 2.

If the graphics processing unit core 1 is currently executing an API call in the API call buffer 11; the graphics processing unit core 2 is currently executing an API call in the API call buffer 21; and the API call buffers currently waiting to be written are API call buffer 12, API call buffer 13, API call buffer 22, and API call buffer 23, then it can randomly select one of four API call buffers including the API call buffer 12, API call buffer 13, API call buffer 22, and API call buffer 23 to write into all API calls of the next frame of the frame to be rendered.

Alternatively, if the preset order of writing the API call buffers is API call buffer 11, API call buffer 21, API call buffer 12, API call buffer 22, API call buffer 13, and API call buffer 23, then it determines to write all API calls of the next frame of the frame to be rendered into the API call buffer 12.

Alternatively, if the preset order is graphics processing unit core 1, graphics processing unit core 2, then it determines to write all API calls of the next frame of the frame to be rendered into the API call buffer 12 or the API call buffer 13.

The examples provided herein are for ease of understanding only, and should not be used as a limitation to the present invention.

In a second embodiment, the step of writing all API calls for each frame to be rendered into different target API call buffers in the preset M×N API call buffers respectively can be: all API calls of the frame to be rendered are preferentially written to the API call buffer corresponding to the graphics processing unit core with low workload based on the workload being executed by each graphics processing unit core.

The workload being performed by the graphics processing unit core can be the total number of draw calls of the frames being processed on the graphics processing unit core, or the workload being performed by the graphics processing unit core can also be the total number of primitives, vertexes of the frames being processed on the graphics processing unit core.

The draw call is one of the graphics API calls, and is the most core call in the rendering. It is directly responsible for driving the graphics processing unit for rendering, and can balance the workload of the graphics processing unit at a finer granularity.

The primitive can be considered as the smallest unit of the graphics processing unit for the rendering task, and the draw call informs the graphics processing unit to perform the rendering task for one or more primitives. The vertexes are a component of the primitive and can also reflect the task situation of the graphics processing unit.

In a third embodiment, the step of writing all API calls for each frame to be rendered into different target API call buffers in the preset M×N API call buffers respectively can also be: sequentially writing all API calls for each frame to be rendered into different target API call buffers in the preset M×N API call buffers respectively according to the preset arrangement order of the API call buffers, wherein in the M×N API call buffers arranged in the preset arrangement order, the N consecutive API call buffers correspond to N graphics processing unit cores respectively.

Since the N consecutive API call buffers correspond to N graphics processing unit cores respectively, when writing all API calls of multiple frames to be rendered, the multiple frames to be rendered can be uniformly distributed to the N graphics processing unit cores, so as to balance the workload of the various graphics processing unit cores and to improve the operating efficiency of the graphics processing unit cores.

For ease of understanding, referring to FIG. 2, as shown in FIG. 2, taking M=2 as an example, there are a total of 2×N (hereinafter referred to as 2N) API call buffers (in the order of the first API call buffer to the 2Nth API call buffer), and each graphics processing unit core corresponds to 2 API call buffers. Since the N consecutive API call buffers correspond to N graphics processing unit cores respectively, two API call buffers corresponding to the same graphics processing unit core are separated by N-1 call buffers. That is to say, the two API call buffers corresponding to the ith graphics processing unit core are in the order of the ith API call buffer and the (i+N)th API call buffer in the 2N API call buffers, wherein i is a positive integer larger than 0 and less than or equal to N.

For example, if all API calls of one frame to be rendered are written into each API call buffer, all API calls of the first frame of the frame to be rendered are first written to the first API call buffer; then all API calls of the second frame to be rendered are written to the second API call buffer, until all API calls of the 2Nth frame to be rendered are written into the 2Nth API call buffer; and then all API calls of the (2N+1)th frame of the frame to be rendered are written into the first API call buffer. The examples provided herein are for ease of understanding only, and should not be used as a limitation to the present invention.

Optionally, in the third embodiment, for each graphics processing unit core, the specific method of parsing all API calls in each target API call buffer to obtain all the rendering tasks corresponding to each frame to be rendered can be: parsing all API calls in the M API call buffers in a preset order respectively for M API call buffers corresponding to each graphics processing unit core, wherein the order of parsing API calls in the M API call buffers is the same as the order of writing API calls in the M API call buffers.

Since the order of parsing API calls in the M API call buffers is the same as the order of writing API calls in the M API call buffers, so that the graphics processing unit core can preferentially execute all API calls for the frame to be rendered that is written first, thereby realizing the effect that the frame to be rendered is written first is output for display first.

In the embodiment, the writing order of M API call buffers corresponding to the ith graphics processing unit core is: the ith API call buffer, the (i+N)th API call buffer, the (i+2N)th API call buffer, ......, i+(M-1)N API call buffer, and the circulation is performed based on this order, where i is a positive integer larger than 0 and less than or equal to N. Therefore, for the ith graphics processing unit core, the execution order of API calls of its corresponding M API call buffers also is: the ith API call buffer, the (i+N)th API call buffer, the (i+2N)th API call buffer ...... i+(M-1)N API call buffer, and the circulation is performed based on this order. The examples provided herein are for ease of understanding only, and should not be used as a limitation to the present invention.

Optionally, in the third embodiment, after obtaining all API calls of the multiple frames to be rendered, it can also clear the previously stored API calls for acquiring rendering resources corresponding to the current target graphics processing unit core in a new added resource buffer, wherein the current target graphics processing unit core is the target graphics processing unit core corresponding to the current target API call buffer where the API calls are being written, the new added resource buffer is configured to store API calls for obtaining the rendering resources; then all the cleared API calls in the new added resource buffers are written into the current target API call buffers; and then the API calls for obtaining the rendering resources in the frame to be rendered corresponding to the current target API call buffers into the new added resource buffers.

After executing the API calls for acquiring the rendering resources, the graphics processing unit core can acquire new rendering resources, and the acquired rendering resources can all continue to be used thereafter. Therefore, for the target graphics processing unit core, when the API call for acquiring the rendering resource is written into any one corresponding API call buffer, the new rendering resource can be obtained, so that the previously stored API calls for acquiring rendering resources corresponding to the current target graphics processing unit core in the new added resource buffer can be cleaned, so as to avoid repeated execution. By writing the API calls for obtaining the rendering resources in the frame to be rendered corresponding to the current target API call buffers into the new added resource buffers. other graphics processing unit cores can also obtain the API calls configured to obtain rendering resources, thereby maintaining the integrity of the rendering resources.

For ease of understanding, the method shown in FIG. 2 is illustrated as an example.

When writing all API calls of the ith frame of the frame to be rendered into the ith API call buffer (if it is the first frame, no other API calls will be existed before, so that the clearing step cannot be performed), and when writing other API call buffers corresponding to the ith graphics processing unit core into the API call, all API calls written into the new added resource buffer are deleted; then all remaining API calls in the new added resource buffer are written into the ith API call buffer; and then the API call for acquiring rendering resources of the ith frame to be rendered is written into the new added resource buffer (if the API call for acquiring the rendering resources does not exist in the ith frame to be rendered, this writing step is not performed).

Afterwards, when writing all API calls of the (i+1)th frame of the frame to be rendered into the (i+1)th API call buffer, and when writing other API call buffers corresponding to the (i+1)th graphics processing unit core into the API call, the API calls written into the new added resource buffer are deleted; then all remaining API calls in the new added resource buffer are written into the (i+1)th API call buffer; and then the API call for acquiring rendering resources of the (i+1)th frame of the frames to be rendered is written into the new added resource buffer, and the above steps are repeated.

Optionally, in the third embodiment, after obtaining all API calls of the multiple frames to be rendered, it can also be: clearing all API calls in the target added resource buffer corresponding to the current target new added resource buffer, wherein the current target graphics processing unit core is the target graphics processing unit core corresponding to the current target API call buffer where the API calls are being written; N new added resource buffers are provided; each new added resource buffer corresponds to one graphics processing unit core; the new added resource buffers are configured to store API calls for acquiring the rendering resources; then writing all API calls in all new added resource buffers corresponding to other graphics processing unit cores into the current target API call buffer; and finally writing the API calls for obtaining the rendering resources in the frame to be rendered corresponding to the current target API call buffers into the target new added resource buffer.

By setting one corresponding new added resource buffer for each graphics processing unit core, so that in M API call buffers corresponding to one graphics processing unit core, the API calls in for acquiring the rendering resources required to be written are all in the same new added resource buffer. Therefore, when clearing, all API calls in the target new added resource buffer corresponding to the current target graphics processing unit core can be cleared; and when acquiring, all API calls in all new added resource buffers corresponding to all the other graphics processing unit cores can be acquired, thereby reducing the probability of errors in clearing and acquiring.

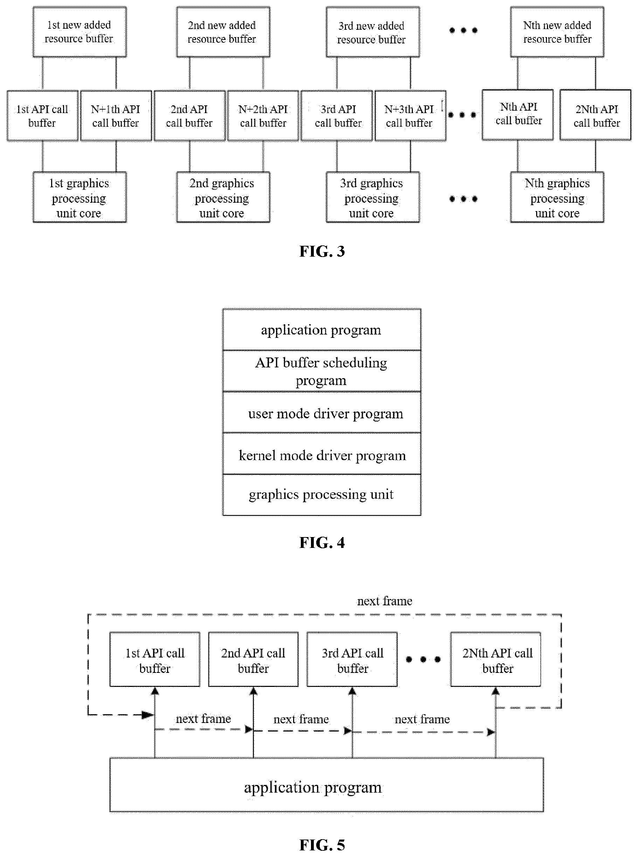

For ease of understanding, the method shown in FIG. 3 is illustrated as an example, wherein the ith graphics processing unit core corresponds to the ith new added resource buffer.

When writing all API calls of the ith frame of the frame to be rendered into the ith API call buffer (if it is the first frame, no other API calls will be existed before, so that the clearing step cannot be performed), all API calls in the ith new added resource buffer corresponding to the ith graphics processing unit core are deleted; then all API calls in the other new added resource buffers (N-1 new added resource buffers other than the ith new added resource buffer) are written to the ith API call buffer; and then the API call for acquiring rendering resources of the ith frame of the frame to be rendered is written into the ith new added resource buffer (if the API call for acquiring the rendering resources does not exist in the ith frame to be rendered, this writing step is not performed).

Afterwards, when writing all API calls of the (i+1)th frame of the frame to be rendered into the (i+1)th API call buffer, all API calls in the (i+1)th new added resource buffer corresponding to the (i+1)th graphics processing unit core are deleted; then all API calls in the other new added resource buffers (N-1 new added resource buffers other than the (i+1)th new added resource buffer) are written to the (i+1)th API call buffer; and then the API call for acquiring rendering resources of the (i+1)th frame of the frame to be rendered is written into the (i+1)th new added resource buffer, and the above steps are repeated.

In one embodiment, a specific method of obtaining all API calls of multiple frames to be rendered, and writing all API calls for each frame to be rendered into different target API call buffers into the M×N API call buffers respectively can be: first obtaining all API calls of the multiple frames to be rendered and the number each frame to be rendered, and writing all API calls and the number of each frame to be rendered into different target API call buffers into the M×N API call buffers.

The number of the frame to be rendered is configured to be obtained by each of the target graphics processing unit cores, so that after each of the target graphics processing unit cores completes rendering the frame to be rendered, a display flush API included in all API calls of the frame to be rendered sequentially transmits the rendered frame to the display buffer according to the numbers of the frames to be rendered, so as to update the content displayed on the screen and other display devices. The numbers of frames to be displayed maintained in the display flush API corresponding to different frames to be rendered are different.

According to different graphics standard libraries used by the platform, the display flush API can be, for example, different APIs such as glXSwapBuffers, eglSwapBuffers, and vkQueuePresentKHR. The specific type of the display flush API is not limited herein.

Since the number of frames to be displayed maintained in each display flush API is the number of its corresponding frame to be rendered, and the numbers corresponding to different frames to be rendered are necessarily different, the numbers maintained in the display flush API corresponding to the different frames to be rendered are different.

Optionally, during the process of sending to display, a global variable can also be maintained, wherein the global variable characterizes the number of the current frames that should be sent for display. Therefore, when the number maintained in the display flush API is the same as the global variable, the frame to be rendered corresponding to the display flush API is sent for display. When sending to display one frame to be rendered is completed, the global variable is added by one.

The numbers of the frames to be rendered are written into the API call buffer, so that the graphics processing unit core can obtain the number of the frame to be rendered, and then the frames to be rendered can be sent to display according to the number of the frame to be rendered, so as to prevent errors in the order of the displayed frames to be rendered, which results in problems such as frame skipping or regression in the displayed video.

Optionally, after writing all API calls of one frame to be rendered into the target API call buffer, the number f of the frame to be rendered is written into the target API call buffer. The number f can be obtained when the graphics processing unit core executes all API calls in the target API call buffer. After the rendering of the frame to be rendered is completed, the rendered frame to be displayed and the number f are sent into the refresh display buffer in the user mode driver. The user mode driver maintains a global variable F (i.e., the number of the current frames to be displayed). If the number of the rendered frame to be displayed f=F, the frame to be displayed is sent for display and the value of F is increased by 1; and if it is not equal, it waits until it is equal. This ensures that the final display order is the same as the order that the frames to be rendered are written.

S120: parsing all API calls in each target API call buffer to obtain all the rendering tasks corresponding to each frame to be rendered.

The specific operation of parsing the API call herein to obtain the rendering task can be performed by the graphics processing unit driver.

Optionally, N graphics processing unit driver threads can exist, N graphics processing unit driver threads and the N graphics processing unit cores are in one-to-one correspondence. Accordingly, when parsing all API calls in each target API call buffer, each graphics processing unit driver thread parses all API calls in the corresponding API call buffer. The API call buffer corresponding to the graphics processing unit driver thread is the API call buffer corresponding to the graphics processing unit core corresponding to the graphics processing unit driver thread.

In one embodiment, before parsing all API calls in the target API call buffer, it needs to determine whether all API calls in the target API call buffer have been written.

Optionally, a specific method of determining that all API calls in the target API call buffer have been written can be: for each target API call buffer, after all API calls are written by the target API call buffer, a write-completion notification message is sent, so as to respond to this notification message, and to obtain and parse all API calls recorded in the target API call buffer, so that the corresponding rendering task is obtained.

The notification message can be an interrupt signal, and an execution command, etc., and the specific type is not limited herein.

Optionally, when one graphics processing unit core corresponds to multiple API call buffers, the order of the received notification message is recorded, and then the API calls in the target API call buffers are sequentially parsed based on the order.

In one embodiment, it can also be that each API call buffer maintains one flag bit, wherein the flag value recorded in the flag bit characterizes one of the execution allowing (or parsing allowing) or writing allowing. At this point, for each target API call buffer, after all API calls are written by the target API call buffer, the value of the flag bit for that target API call buffer is updated to a first value characterizing the existence of a pending API call (i.e., characterizing the execution allowing). After all API calls in the target API call buffer have been executed, the value of the flag bit of target API call buffer is updated to a second value characterizing the writing allowing in API call.

Optionally, in this embodiment, it needs to check the value of the flag bit before writing the API call into the API call buffer. If the value of the flag bit is a second value characterizing allowing to write the API call, all API calls of the frame to be rendered can be written into the API call buffer; and if the value of the flag bit is a first value characterizing the presence of a pending API call, it waits until the value of the flag bit changes to the second value.

Similarly, before executing the target API call buffer, the value of the flag bit needs to be checked. If the value of the flag bit is a first value characterizing the presence of a pending API call, the API call in the target API call buffer is executed; and if the value of the flag bit is a second value characterizing allowing to write the API call, it waits until the value of the flag bit changes to the second value.

In one embodiment, it can also add a first value characterizing the pending API call into the target API call buffer after writing all API calls of one frame to be rendered into the target API call buffer, wherein the first value can be a field or a segment of information.

After executing all API calls in the API call buffer, a second value characterizing allowing to write the API calls is added into API call buffer, wherein the second value can also be a field or a segment of information.

S130: sending all rendering tasks corresponding to each frame to be rendered to individual target graphics processing unit cores, so that each of the target graphics processing unit cores respectively executes the rendering tasks corresponding to each of the target graphics processing unit cores, so as to realize rendering for multiple frames to be rendered.

The rendering tasks corresponding to each of the target graphics processing unit cores are all the rendering tasks obtained by parsing all API calls in the target API call buffer corresponding to the target graphics processing unit core.

In one embodiment, the above graphics rendering method can be performed by an API buffer scheduling program. In general, the graphics rendering software stack workflow usually includes: calling the standard graphic API by applications (game software, video software, and office software, etc.) required to perform the rendering, so as to enter into the user mode graphics processing unit driver program (if the graphics processing unit is a GPU, it is a GPU driver program herein), so that these APIs are converted into commands on graphics card (that is obtaining the rendering task by completing parsing on the API call), and then they are sent to the graphics processing unit via the kernel mode driver for rendering. In this mode, the call and execution for the standard graphic API can be considered synchronized. This solution adds a new layer of API buffer scheduling program between the application program and the user mode driver. As shown in FIG. 4, it is illustrated with each graphics processing unit core corresponding to two API call buffers. It is noted that in the practical application, the number of API call buffers corresponding to each graphics processing unit core is not limited to two, but can be three or more.

The application calling the standard graphic API does not enter the user mode driver program, but instead enters the API buffer scheduling program and returns directly after execution. The application can create 2 * N API call buffers for recording the API calls. The API call buffers are used in order. When the application calls the graphic API (such as the standard API function eglSwapBuffers) of refresh display buffer (i.e., after all API calls of the previous frame of the frame to be rendered have been written, it switches to the next frame to be rendered), it switches to the next API call buffer (i.e., after the application has written all API calls of one frame to be rendered into one API call buffer, it switches to the next API call buffer to continue to write the API calls of the next frame to be rendered). In this way, each API call buffer stores all API calls of each frame to be rendered, as shown in FIG. 5.

The API buffer scheduling program will start N threads when recording API calls for the execution of the recorded API calls. Each execution thread corresponds to one graphics processing unit core, and the thread calls the corresponding graphics processing unit core to execute the API call in the corresponding API call buffer. For ease of description, the subsequent description denotes the execution thread corresponding to the nth graphics processing unit core by thread Tn, such as thread T1 corresponding to the 1st graphics processing unit core, and so on. When Tn is executed, the API call will be only circularly executed in the nth API call buffer and the (n+N)th API call buffer. When the record in one buffer is executed, it enters another buffer for execution, as shown in FIG. 2.

Each API call buffer stores one flag bit to mark the usage status of the API call buffer. The value of this flag bit has two meanings of allowing recording and allowing execution.

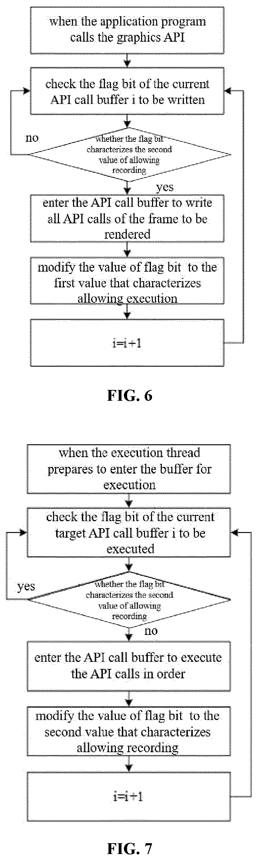

As shown in FIG. 6, when the application program calls the graphics API and enters the API buffer scheduling program to prepare to record all API calls of the frame to be rendered, it first checks the flag bit of the current API call buffer i to be written. If it characterizes the second value of allowing recording, it enters the API call buffer to write all API calls of the frame to be rendered. After all API calls of the frame to be rendered are written, the recording is stopped and the value of the flag bit is modified to the first value that characterizes the allowing execution. The flag bit of the next API call buffer is queried. If the value of the flag bit is the first value of allowing execution, it enters a spin wait until it is set to the second value of allowing to be recorded.

As shown in FIG. 7, each execution thread first checks this flag bit when preparing to enter the buffer for execution. If it is in the allowing execution state, it enters the API call buffer to execute the API calls in order. After the execution is completed, it will set the buffer flag bit as the second value of allowing recording, and query the flag bit of the next API buffer required to be executed, and so on; and if it is in the allowing recording state, it enters into the spin wait until it is set as the allowing execution state.

Since it needs to ensure that the rendering work of each graphics processing unit core remains independent and the synchronization dependency between graphics processing unit cores is completely removed, each execution thread needs to create its own independent rendering context, wherein each thread (i.e., each graphics processing unit core) holds the resources (texture resources, and shader resources, etc.) required for rendering.

At this time, each graphics processing unit core will almost simultaneously complete the rendering of one frame and wait to be sent to the display, so that it needs to add a mechanism to ensure the correct order of frames for the refresh display buffer. Therefore, after the application main thread records all API calls of one frame (the API call buffer completes writing of all API calls of one frame to be rendered), it needs to record the number of the current frames to be rendered in the current API buffer, denotes as f. When executed, f will be sent to the related function of the refresh display buffer in the user mode driver via the execution thread. The user mode driver program creates and maintains a new global variable F, which represents the number of the frame to be rendered that should be displayed at this moment. Each execution thread first checks the number f of the frame to be displayed when entering into the display flush API (different threads correspond to different values of the number f). If f is equal to F, it enters the refresh display buffer function and sends its own frame to be displayed for displaying, and increases the value of F by 1; and if it is not equal, it spin-waits until it is equal, so to ensure that the final display order is the same as the order of sending the application.

Each execution thread holds its own rendering resources individually without interfering with each other. In order to solve the problem of missing resources required for rendering a certain core due to the dependence of the front and back frames, N new added resource buffers are added. Each new added resource buffer corresponds to one graphics processing unit core, and the new added resource buffer is configured to store API calls for acquiring the rendering resources. When writing API calls to the API call buffer, it is to clear all API calls in the target new added resource buffer corresponding to the current target graphics processing unit core; write all API calls in all new added resource buffers corresponding to other graphics processing unit cores into the current target API call buffer; and write the API calls for obtaining the rendering resources in the frame to be rendered corresponding to the current target API call buffers into the target new added resource buffer.

Based on the same technical concept, the present invention further provides a multi-graphics-processing-unit-core parallel rendering method, and the graphics rendering method is applied to any one of the graphics processing unit cores of the graphics processing unit.

The multi-graphics-processing-unit-core parallel rendering method includes: receiving and executing rendering tasks sent by the processing unit to realize rendering for the frame to be rendered.

The rendering tasks are all the rendering tasks obtained by parsing the API calls in the target API call buffer corresponding to the graphics processing unit core.

The target API call buffer is an API call buffer of all API calls that writes at least one frame to be rendered in preset M×N API call buffers, wherein N is a positive integer larger than 1; M is a positive integer larger than 1; M API call buffers correspond to one graphics processing unit core; and the at least two target API call buffers correspond to different target graphics processing unit cores in the N graphics processing unit cores.

The specific method of sending the frame to be rendered for displaying is described clearly in the foregoing. For the sake of the brief description, it will not be repeated herein.

The specific processing method of the graphics processing unit core executing the graphics rendering method is described clearly in the foregoing. For the sake of the brief description, it will not be repeated herein.

In one embodiment, the multi-graphics-processing-unit-core parallel rendering method can further include: acquiring a number of the frame to be rendered; and executing a display flush API in the API calls in the target API call buffer after completing rendering for the frame to be rendered, so that the rendered frame can be sent to display according to the number of the frame to be rendered sequentially, wherein the numbers of frames to be displayed maintained in the display flush API corresponding to different frames to be rendered are different.

For example, when 3 frames of frames to be rendered are rendered, and the numbers of these 3 frames of frames to be rendered are 1001, 1002, and 1003 respectively, the display flush API corresponding to the frame to be rendered with the number of 1001 should be executed first, so that the frame to be rendered with the number of 1001 is sent for display; then the display flush API corresponding to the frame to be rendered with the number of 1002 is executed, so that the frame to be rendered with the number of 1002 is sent for display; and finally the display flush API corresponding to the frame to be rendered with the number of 1003 is executed, so that the frame to be rendered with the number of 1003 is sent for display.

Optionally, during the process of sending to display, a global variable can also be maintained, wherein the global variable characterizes the number of the current frames that should be sent for display. Therefore, when the number maintained in the display flush API is the same as the global variable, the frame to be rendered corresponding to the display flush API is sent for display. When sending to display one frame to be rendered is completed, the global variable is added by one.

The steps are described clearly in the foregoing, including acquiring a number of the frame to be rendered, and executing a display flush API in the API calls in the target API call buffer after completing rendering for the frame to be rendered, so that the rendered frame can be sent to display according to the number of the frame to be rendered sequentially. For the sake of the brief description, it will not be repeated herein.

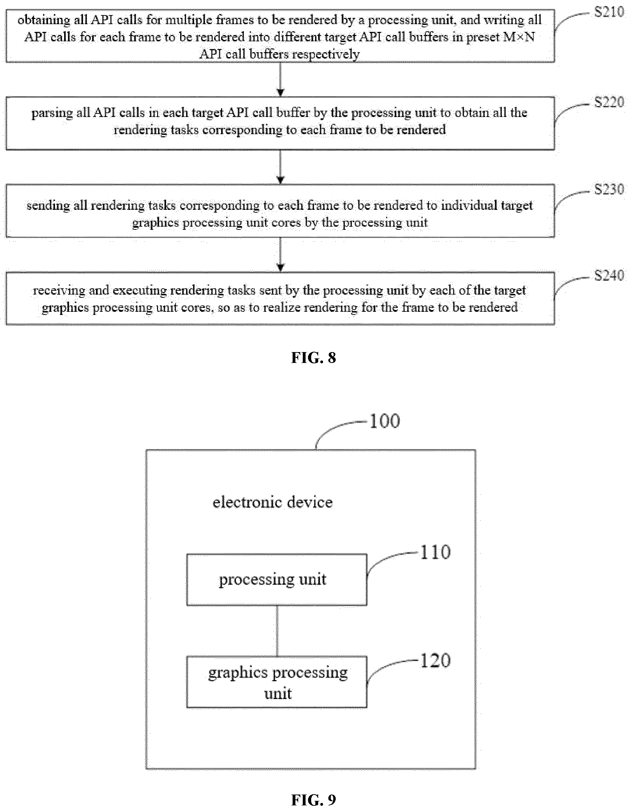

Based on the same technical concept, the present invention further provides a multi-graphics-processing-unit-core parallel rendering method, as shown in FIG. 8. The steps included therein will be described below in conjunction with FIG. 8.

S210: obtaining all API calls for multiple frames to be rendered by a processing unit, and writing all API calls for each frame to be rendered into different target API call buffers in preset M×N API call buffers respectively.

N is a positive integer larger than 1; M is a positive integer larger than 1; M API call buffers correspond to one graphics processing unit core; and the at least two target API call buffers correspond to different target graphics processing unit cores in the N graphics processing unit cores.

S220: parsing all API calls in each target API call buffer by the processing unit to obtain all the rendering tasks corresponding to each frame to be rendered.

S230: sending all rendering tasks corresponding to each frame to be rendered to individual target graphics processing unit cores by the processing unit.

S240: receiving and executing rendering tasks sent by the processing unit by each of the target graphics processing unit cores, so as to realize rendering for the frame to be rendered.

The rendering tasks are all the rendering tasks obtained by parsing the API calls in the target API call buffer corresponding to the graphics processing unit core.

The target API call buffer is an API call buffer of all API calls that writes at least one frame to be rendered in preset M×N API call buffers, wherein N is a positive integer larger than 1; M is a positive integer larger than 1; M API call buffers correspond to one graphics processing unit core; and the at least two target API call buffers correspond to different target graphics processing unit cores in the N graphics processing unit cores.

The specific embodiments of S210-S240 shown in FIG. 8 can be referred to in the foregoing S110-S130, and the foregoing multi-graphics-processing-unit-core parallel rendering method applied to any one of the graphics processing unit cores in the graphics processing unit. For the sake of the brief description, it will not be repeated herein.

Based on the same technical conception, the present invention further provides a processing unit, wherein the processing unit is used to execute the forgoing multi-graphics-processing-unit-core parallel rendering method.

For example, the processing unit can be used to obtain all API calls for multiple frames to be rendered, and write all API calls for each frame to be rendered into different target API call buffers in preset M×N API call buffers respectively, wherein N is a positive integer larger than 1; M is a positive integer larger than 1; M API call buffers correspond to one graphics processing unit core; and the at least two target API call buffers correspond to different target graphics processing unit cores in the N graphics processing unit cores. API calls in each target API call buffer are parsed to obtain all the rendering tasks corresponding to each frame to be rendered; and all rendering tasks corresponding to each frame to be rendered are sent to each of the target graphics processing unit cores, so that each of the target graphics processing unit cores respectively executes the rendering tasks corresponding to each of the target graphics processing unit cores, so as to realize rendering for multiple frames to be rendered, wherein the rendering tasks corresponding to each of the target graphics processing unit cores are all the rendering tasks obtained by parsing all API calls in the target API call buffer corresponding to the target graphics processing unit core.

The specific execution logic of the processing unit, and the specific embodiment of the processing unit are described clearly in the foregoing. For the sake of the brief description, it will not be repeated herein.

Based on the same technical conception, the present invention further provides a graphics processing unit, wherein the processing unit is used to execute the forgoing multi-graphics-processing-unit-core parallel rendering method.

For example, each layer of the processing unit core in the graphics processing unit is used to receive and execute rendering tasks sent by the processing unit to realize rendering for the frame to be rendered, wherein the rendering tasks are all the rendering tasks obtained by parsing the API calls in the target API call buffer corresponding to the graphics processing unit core, wherein the target API call buffer is an API call buffer of all API calls that writes at least one frame to be rendered in preset M×N API call buffers, wherein N is a positive integer larger than 1; M is a positive integer larger than 1; M API call buffers correspond to one graphics processing unit core; and the at least two target API call buffers correspond to different target graphics processing unit cores in the N graphics processing unit cores.

The specific execution logic of the graphics processing unit, and the specific embodiment of the graphics processing unit are described clearly in the foregoing. For the sake of the brief description, it will not be repeated herein.

Based on the same technical concept, the present invention further provides an electronic device. As shown in FIG. 9, the electronic device 100 includes: a processing unit 110 and a graphics processing unit 120, wherein the processing unit 110 is connected to the graphics processing unit 120.

The processing unit 110 is used to execute the graphics rendering method provided by the embodiment and various embodiments thereof. For example, the processing unit 110 is used to obtain all API calls for multiple frames to be rendered, and write all API calls for each frame to be rendered into different target API call buffers in preset M×N API call buffers respectively, wherein N is a positive integer larger than 1; M is a positive integer larger than 1; M API call buffers correspond to one graphics processing unit core; and the at least two target API call buffers correspond to different target graphics processing unit cores in the N graphics processing unit cores. API calls in each target API call buffer are parsed to obtain all the rendering tasks corresponding to each frame to be rendered. All rendering tasks corresponding to each frame to be rendered are sent to each of the target graphics processing unit cores, so that each of the target graphics processing unit cores respectively executes the rendering tasks corresponding to each of the target graphics processing unit cores, so as to realize rendering for multiple frames to be rendered, wherein the rendering tasks corresponding to each of the target graphics processing unit cores are all the rendering tasks obtained by parsing all API calls in the target API call buffer corresponding to the target graphics processing unit core.

The processing unit 110 can be data a processing core of the CPU, AI, NPU, ISP, DPU, VPU, and DSP, and the specific types are not limited herein.

The graphics processing unit 120 is used to execute the above graphics rendering method applied to any one of the graphics processing unit cores in the graphics processing unit. For example, each core in the graphics processing unit 120 is used to response to the notification sent by the processing unit 110, and execute the API call in the target API call buffer corresponding to the graphics processing unit core, so as to realize the rendering of the frame to be rendered; or it accesses a flag value of the target API call buffer corresponding to the graphics processing unit core, wherein when the flag value characterizes the existence of a first value of the API call to be executed, the API call in the corresponding target API call buffer is executed, so as to realize the rendering of the frame to be rendered, wherein the target API call buffer is an API call buffer of all API calls that writes at least one frame to be rendered in preset M×N API call buffers, wherein N is a positive integer larger than 1; M is a positive integer larger than 1; M API call buffers correspond to one graphics processing unit core; and the at least two target API call buffers correspond to different target graphics processing unit cores in the N graphics processing unit cores.

The graphics processing unit 120 can be any type of GPU (graphics processing unit), NPU, ISP, DPU, or VPU, etc.

## Claims

1. A multi-graphics-processing-unit-core parallel rendering method, applicable to a processing unit, **characterized in that** the method comprises:
obtaining all API calls for multiple frames to be rendered, and writing all API calls for each frame to be rendered into different target API call buffers in preset M×N API call buffers respectively, wherein N is a positive integer larger than 1; M is a positive integer larger than 1; M API call buffers correspond to one graphics processing unit core; and at least two target API call buffers correspond to different target graphics processing unit cores in N graphics processing unit cores;
parsing all API calls in each target API call buffer to obtain all rendering tasks corresponding to the each frame to be rendered; and
sending the all rendering tasks corresponding to the each frame to be rendered to individual target graphics processing unit cores, so that each of the target graphics processing unit cores respectively executes rendering tasks corresponding to each of the target graphics processing unit cores, so as to realize rendering for the multiple frames to be rendered, wherein the rendering tasks corresponding to each of the target graphics processing unit cores are all rendering tasks obtained by parsing the all API calls in the target API call buffer corresponding to the target graphics processing unit core.

2. The method according to claim 1, wherein the step of obtaining all API calls of multiple frames to be rendered, and writing all API calls for the each frame to be rendered into different target API call buffers into M×N API call buffers respectively comprises:
obtaining the all API calls of the multiple frames to be rendered and a number of the each frame to be rendered, and writing the all API calls and the number of the each frame to be rendered into the different target API call buffers into the M×N API call buffers respectively, wherein
the number of the frame to be rendered is configured to be obtained by each of the target graphics processing unit cores, so that after each of the target graphics processing unit cores completes rendering the frame to be rendered, a display flush API comprised in the all API calls of the frame to be rendered sequentially sends the rendered frame to be displayed according to numbers of the frames to be rendered, wherein the numbers of frames to be displayed maintained in the display flush API corresponding to different frames to be rendered are different.

3. The method according to claim 1, wherein each of the graphics processing unit cores holds complete rendering resources required for rendering.

4. The method according to claim 1, wherein the step of writing all API calls for the each frame to be rendered into different target API call buffers in preset M×N API call buffers respectively comprises:
sequentially writing the all API calls for the each frame to be rendered into the different target API call buffers in the preset M×N API call buffers respectively according to a preset arrangement order of the API call buffers, wherein in the M×N API call buffers arranged in the preset arrangement order, N consecutive API call buffers correspond to N graphics processing unit cores respectively.

5. The method according to claim 4, wherein the step of parsing all API calls in each of the target API call buffers to obtain all rendering tasks corresponding to the each frame to be rendered comprises:
parsing all API calls in M API call buffers in a preset order respectively for the M API call buffers corresponding to each graphics processing unit core, wherein an order of parsing API calls in the M API call buffers is the same as an order of writing API calls into the M API call buffers.

6. The method according to claim 4, wherein after obtaining the all API calls of the multiple frames to be rendered, the method further comprises:
clearing previously stored API calls for acquiring rendering resources corresponding to a current target graphics processing unit core in a new added resource buffer, wherein the current target graphics processing unit core is a target graphics processing unit core corresponding to a current target API call buffer where the API calls are being written, and the new added resource buffer is configured to store API calls for obtaining the rendering resources;
writing all the cleared API calls in the new added resource buffer into the current target API call buffer; and
writing the API calls for obtaining the rendering resources in the frame to be rendered corresponding to the current target API call buffer into the new added resource buffer.

7. The method according to claim 4, wherein after obtaining the all API calls of the multiple frames to be rendered, the method further comprises:
clearing all API calls in a target new added resource buffer corresponding to a current target graphics processing unit core, wherein the current target graphics processing unit core is a target graphics processing unit core corresponding to a current target API call buffer where API calls are being written; N new added resource buffers are provided; each of the new added resource buffers corresponds to one graphics processing unit core; the new added resource buffers are configured to store API calls for acquiring the rendering resources;
writing all API calls in all new added resource buffers corresponding to other graphics processing unit cores into the current target API call buffer; and
writing the API calls for obtaining the rendering resources in the frame to be rendered corresponding to the current target API call buffer into the target new added resource buffer.

8. The method according to claim 1, wherein each of the API call buffers stores all API calls of one frame to be rendered each time.

9. A multi-graphics-processing-unit-core parallel rendering method, applicable to any one of graphics processing unit cores in a graphics processing unit, **characterized in that** the method comprises:
receiving and executing rendering tasks sent by a processing unit to realize rendering for a frame to be rendered, wherein the rendering tasks are all rendering tasks obtained by parsing API calls in a target API call buffer corresponding to the graphics processing unit core, wherein
the target API call buffer is an API call buffer of all API calls that writes at least one frame to be rendered in preset M×N API call buffers, wherein N is a positive integer larger than 1; M is a positive integer larger than 1; M API call buffers correspond to one graphics processing unit core; and at least two target API call buffers correspond to different target graphics processing unit cores in N graphics processing unit cores.

10. The method according to claim 9, wherein the method further comprises:
acquiring a number of the frame to be rendered; and
executing a display flush API in the API calls in the target API call buffer after completing rendering for the frame to be rendered, so that the rendered frame is sent to display according to the number of the frame to be rendered sequentially, wherein the numbers of frames to be displayed maintained in the display flush API corresponding to different frames to be rendered are different.

11. A multi-graphics-processing-unit-core parallel rendering method, **characterized by** comprising:
obtaining all API calls for multiple frames to be rendered by a processing unit, and writing all API calls for each frame to be rendered into different target API call buffers in preset M×N API call buffers respectively, wherein N is a positive integer larger than 1; M is a positive integer larger than 1; M API call buffers correspond to one graphics processing unit core; and at least two target API call buffers correspond to different target graphics processing unit cores in N graphics processing unit cores;
parsing all API calls in each target API call buffer by the processing unit to obtain all rendering tasks corresponding to the each frame to be rendered;
sending the all rendering tasks corresponding to the each frame to be rendered to individual target graphics processing unit cores by the processing unit; and
receiving and executing the rendering tasks sent by the processing unit by each of the target graphics processing unit cores, so as to realize rendering for the frame to be rendered, wherein the rendering tasks are all rendering tasks obtained by parsing the API calls in the target API call buffer corresponding to the graphics processing unit core, wherein
the target API call buffer is an API call buffer of all API calls that writes at least one frame to be rendered in the preset M×N API call buffers, wherein N is a positive integer larger than 1; M is a positive integer larger than 1; M API call buffers correspond to one graphics processing unit core; and at least two target API call buffers correspond to different target graphics processing unit cores in N graphics processing unit cores.

12. A processing unit, **characterized by** being configured to perform the method according to any one of claims 1-8.

13. A graphics processing unit, **characterized by** being configured to perform the method according to any one of claims 9-10.

14. An electronic device, **characterized by** comprising: a processing unit and a graphics processing unit, wherein the processing unit is connected to the graphics processing unit, wherein
the processing unit is configured to perform the method according to any one of claims 1-8, and
the graphics processing unit is configured to perform the method according to any one of claims 9-10.
